# EUROPÄISCHE PATENTSCHRIFT

(11) **EP 1 864 272 B1**
(45) Veröffentlichungstag und Bekanntmachung des Hinweises auf die Patenterteilung: **27.04.2011**
(21) Anmeldenummer: 06708318.8
(22) Anmeldetag: 16.02.2006
(51) Int. Cl.: G09F 9/33, G09F 9/35, G09F 13/22

(54) **BELEUCHTETES ANZEIGEFENSTER FÜR LED- UND/ODER LC-ANZEIGEN**
ILLUMINATED DISPLAY WINDOW FOR LED AND/OR LC DISPLAYS
FENETRE D'AFFICHAGE ECLAIREE POUR DES SYSTEMES D'AFFICHAGE A DIODES ELECTROLUMINESCENTES (LED) ET/OU A CRISTAUX LIQUIDES

(30) Priorität: 24.03.2005 DE 102005013804
(43) Veröffentlichungstag der Anmeldung: 12.12.2007
(73) Patentinhaber: BSH Bosch und Siemens Hausgeräte GmbH, 81739 München (DE)
(72) Erfinder: GIETL, Günter, 93333 Neustadt (DE); HELBRECHT, Erwin, 93173 Wenzenbach (DE); KLEINLEIN, Herbert, 90522 Oberasbach (DE); KNOPP, Lothar, 12209 Berlin (DE); LUDENIA, Thomas, 14612 Falkensee (DE); MAGER, Gerhard, 90556 Cadolzburg (DE); VOGELSANG, Peter, 93049 Regensburg (DE)
(86) Internationale Anmeldenummer: PCT/EP2006/060026
(87) Internationale Veröffentlichungsnummer: WO 2006/100160

(56) Entgegenhaltungen:
- EP-A- 0 600 158
- WO-A-02/14795
- PATENT ABSTRACTS OF JAPAN Bd. 2003, Nr. 12, 5. Dezember 2003 (2003-12-05) & JP 2004 325530 A (EESHIKKU KK; NIPPON PACHINKO BUHIN KK), 18. November 2004 (2004-11-18)
- PATENT ABSTRACTS OF JAPAN Bd. 2002, Nr. 07, 3. Juli 2002 (2002-07-03) & JP 2002 072933 A (SONY CORP), 12. März 2002 (2002-03-12)

## Beschreibung

Die Erfindung betrifft ein Anzeigefenster, insbesondere für LED (Light Emitting Diode)- und LC (Liquid Chrystal)-Anzeigen, mit einem Leuchtmittel und einer Mikrostruktur zur Beleuchtung des Anzeigefensters.

Aus der DE 20 2004 001 911 U1 ist eine LED-Anzeige mit davor angeordneter Lichtleitplatte bekannt. Die mit einer Projektionslichtquelle beleuchtbare Lichtleitplatte soll dabei eine Lichtschirm-Wirkung für die LED-Anzeige schaffen. Damit das Licht der Projektionslichtquelle möglichst vollkommen reflektiert und konzentriert werden kann, ist eine lichtleitende Konfiguration vorgesehen. Diese Konfiguration ist auf der dem Betrachter zugewandten Oberfläche der Lichtleitplatte angeordnet. Da die Lichtleitplatte die Anzeige nach außen hin abschließt, ist die Konfiguration sämtlichen äußeren Einflüssen ohne Schutz ausgesetzt. Ein weiterer Nachteil dabei ist, dass die aufgrund der Konfiguration unebene Oberfläche der Lichtleitplatte für Verschmutzungen wie beispielsweise Staub einen guten Halt bietet. Die Verschmutzungen oder auch Beschädigungen wie beispielsweise Kratzer können die lichtleitende Funktion der Konfiguration negativ beeinflussen oder sogar völlig hemmen.
Document JP 2004325530 ist als nächstliegender Stand der Technik angesehen.

Der Erfindung liegt daher die Aufgabe zugrunde, ein Anzeigefenster, insbesondere für LED- und LC-Anzeigen, zur Verfügung zu stellen, welches die Anzeige schützt und eine gleich bleibend gute Vordergrundbeleuchtung für die Anzeige bei gleichzeitig guter Ablesbarkeit der Anzeigeinformation gewährleistet.

Diese Aufgabe wird gelöst durch ein Anzeigefenster nach anspruch 1, insbesondere für LED- und LC-Anzeigen, mit einem Leuchtmittel und einer Mikrostruktur zur Beleuchtung des Anzeigefensters, bei welchem die Mikrostruktur am Anzeigefenster auf dessen der Anzeige zugewandten Seite angeordnet ist.

Erfindungsgemäß wird zwischen einer Vorder- und einer Rückseite des Anzeigefensters unterschieden. Die dem Betrachter zugewandte Seite des Anzeigefensters stellt dabei die Vorderseite und die der Anzeige zugewandte Seite die Rückseite des Anzeigefensters dar. Im Allgemeinen sind Vorder- und Rückseite parallel zueinander angeordnet. Eine davon abweichende nicht parallele Anordnung von Vorder- und Rückseite zueinander kann aus konstruktiven Gründen je nach Aufbau der Anzeigeeinheit notwendig sein.

Die Mikrostruktur sorgt für eine Auskopplung der vom Leuchtmittel in das Anzeigefenster seitlich eingekoppelten Lichtenergie auf der Vorderseite des Anzeigefensters. Somit kann das gesamte Anzeigefenster gezielt beleuchtet werden. Durch ihre erfindungsgemäße Anordnung auf der Rückseite des Anzeigefensters liegt die Mikrostruktur im Inneren der Anzeigeeinheit. Diese Anordnung schützt die Mikrostruktur vor widrigen äußeren Einflüssen und gewährleistet somit eine dauerhaft gute Ablesbarkeit der Anzeigeinformation. Beispielsweise können sich so keine Staubpartikel auf der Mikrostruktur festsetzen. Auch äußere Einflüsse wie chemische Reinigungsmittel oder Beschädigungen aufgrund mechanischer Einwirkung - wie zum Beispiel Kratzer - können die Mikrostruktur nicht beschädigen und ihre Funktion nicht beeinträchtigen.

Die Mikrostruktur erfüllt also eine Doppelfunktion: Einerseits strahlt sie Licht, das seitlich in das Anzeigefenster eingestrahlt wird, zur Vorderseite des Anzeigefensters und damit entgegen der Blickrichtung des Benutzers ab. Andererseits gewährt sie einem Benutzer den Durchblick auf die Anzeige in einer Richtung rechtwinklig zur Ebene des Anzeigefensters. Dazu kann die Mikrostruktur Flächen aufweisen, welche das vom Leuchtmittel in das Anzeigefenster eingekoppelte Licht senkrecht zur Oberfläche bzw. Vorderseite des Anzeigefensters reflektieren. Die Flächen können dabei winklig angeordnet und/oder eben, konkav oder konvex sein. Die geometrische Form der Flächen kann dabei grundsätzlich frei gewählt werden, solange sie eine im Wesentlichen senkrechte Abstrahlung bewirkt. Die senkrechte Abstrahlung des eingekoppelten Lichts erzeugt den intensivsten Lichteindruck auf den Betrachter und bietet demzufolge die beste Ausbeute der eingekoppelten Lichtenergie.

Um beide vorgenannten Funktionen der Mikrostruktur zu erfüllen, können die Flächen in einer ersten Ausgestaltungsform das Anzeigefenster vollständig bedecken und nur teilweise reflektierend bzw. so weit lichtdurchlässig ausgestaltet sein, dass die Anzeigeinformation durch sie hindurch erkennbar bleibt. Nach einer anderen Ausgestaltungsform können die Flächen vollständig reflektierend ausgebildet sein, dann aber nicht die gesamte Fläche des Anzeigefensters einnehmen. Sie können vielmehr Zwischenräume zwischen sich freilassen, durch die hindurch die Anzeigeinformation erkennbar bleibt. Aufgrund ihrer miniaturisierten Ausbildung und der gleichmäßigen Verteilung der Flächen in der Mikrostruktur ergibt sich für den Benutzer dennoch ein homogener Eindruck.

Die Mikrostruktur kann auch innerhalb des Anzeigefensters in Form von Mikropartikeln mit reflektierenden Flächen ausgebildet sein, welche eine für die senkrechte Lichtreflektion geeignete Ausrichtung aufweisen. Die Ausrichtung der Mikropartikel kann zum Beispiel mittels eines Magnetfelds während des Herstellungsprozesses des Anzeigefensters erfolgen, wobei den Mikropartikeln selbst beispielsweise Metallpulver beigemengt wird. Eine sehr feine Verteilung der Mikropartikel erzielt eine flächige und homogene Auskopplung der Lichtenergie.

Erfmdungsgemäß werden einerseits Leuchtmittel zur Beleuchtung des Anzeigefensters und andererseits Anzeige-LEDs bzw. Anzeige-LC-Zellen zur Darstellung der Anzeigeinformation unterschieden.

Auch als Leuchtmittel können LEDs eingesetzt werden. Solche LEDs können grundsätzlich alle dem Fachmann bekannten LEDs sein, welche zur Beleuchtung des Anzeigefensters geeignet sind. Beispielsweise können SMD (Surface Mounted Device)-LEDs eingesetzt werden, welche auf derselben Platine platzierbar sind, die auch die Anzeige-LEDs trägt. Auch die Anzeige-LEDs können in SMD-Bauweise ausgeführt sein. Bei der Platine kann es sich zum Beispiel um eine PCB (Printed Circuit Board)-Platine handeln.

Die Leuchtmittel in Form von LEDs können zum Beispiel in das Anzeigefenster integriert, seitlich an das Anzeigefenster angrenzend und/oder auch vom Anzeigefenster entfernt angeordnet sein. Insbesondere bei einer vom Anzeigefenster entfernten Anordnung der Leuchtmittel können nach einer weiteren vorteilhaften Ausgestaltung der Erfindung Lichtleitstrecken zwischen Leuchtmittel und Anzeigefenster angeordnet sein. Über die Lichtleitstrecken wird die Lichtenergie der Leuchtmittel an den Sichtbereich des Anzeigefensters weitergeleitet. Die Lichtleitstrecken können Teil des Anzeigefensters sein. Sie können in der Ebene des Anzeigefensters oder in einem Winkel dazu angeordnet sein.

Erfindungsgemäß kann das Anzeigefenster eine Folie oder Bedruckung aufweisen. Die Folie bzw. Bedruckung kann vorzugsweise - gegen äußere Einflüsse geschützt - auf der Rückseite des Anzeigefensters angeordnet sein und es zur Definition von Bereichen des Anzeigefensters teilweise oder vollständig bedecken. Dabei kann es sich sowohl um Bereiche zur Darstellung von Anzeigeinformation als auch um Bereiche handeln, in denen keine Anzeigeinformation dargestellt wird. Bei lichtundurchlässiger Folie oder Bedruckung können Bereiche ohne Anzeigeinformation des Anzeigefensters so abgedeckt werden, dass sie für den Betrachter dunkel erscheinen. Die Bereiche mit einer Anzeigeinformation können dann entweder mit transparenter Folie oder ohne Bedruckung ausgeführt sein. Damit kann eine Abgrenzung oder ein besserer Kontrast zu beleuchteten Bereichen mit Anzeigeinformation erzielt werden. Alternativ kann das Anzeigefenster nur bereichsweise eine Folie oder Bedruckung aufweisen. Somit kann die mittels der Mikrostruktur reflektierte Lichtenergie in Form einer Vordergrundbeleuchtung in genau abgegrenzten Bereichen der Mikrostruktur sichtbar gemacht werden.

Eine weitere Darstellungsmöglichkeit der Anzeigeinformation ergibt sich durch eine auf das Anzeigefenster aufgebrachte negative Bedruckung bzw. negative Darstellung der Anzeigeinformation auf einer Folie oder auf dem Anzeigefenster. Dabei erscheint dem Betrachter die Anzeigeinformation - beispielsweise in Form von Texten und/oder Symbolen - bei Beleuchtung als lichtdurchlässig. Die Bereiche ohne Anzeigeinformation können dabei lichtundurchlässig bedruckt oder mit lichtundurchlässiger Folie abgedeckt sein.

Erfindungsgemäß kann die Folie diffus sein. Mittels einer diffusen Folie erscheint eine durch mehrere Einzel-LEDs dargestellte Anzeigeinformation für den Betrachter homogen, da er separate LEDs durch die diffuse Folie nicht mehr wahrnehmen kann. Dieser Effekt kann durch einen gewissen Abstand zwischen Anzeige-LEDs und Anzeigefenster unterstützt werden.

Das Anzeigefenster kann vollständig oder teilweise eingefärbt sein, so dass Bereiche des Anzeigefensters unterschiedlich farbig erscheinen. Dies kann die Zuordnung bzw. die Wiedererkennung bestimmter Bereiche für den Betrachter verbessern. Beispielsweise können Anzeigeinformationen mit Warn- oder Alarmcharakter rot hervorgehoben werden.

Gerade im Hinblick auf modernes Lichtdesign kann je nach Ausführungsform des Anzeigefensters, insbesondere durch farbige Darstellungen, eine hohe Emotionalität bzw. Wirkung auf den Betrachter erzielt werden. Das Anzeigefenster kann somit quasi die Funktion einer zweiten Anzeigeebene übernehmen.

Erfindungsgemäß kann zwischen dem Anzeigefenster und der Platine eine Reflektorbox angeordnet sein. Sie dient zur Abgrenzung unterschiedlicher Anzeigeinformationsbereiche. Insbesondere bei großen Abständen zwischen Anzeige-LEDs und Anzeigefenster könnte es andernfalls zu gegenseitiger negativer Beeinflussung benachbarter Anzeigeinformationsbereiche kommen. Z. B. könnte im Fall der oben beschriebenen Darstellung der Anzeigeinformation mittels negativer Bedruckung, welche zusätzlich durch eine diffuse Folie abgedeckt sein kann, ohne Reflektorbox ein momentan nicht beleuchteter Bereich mit Anzeigeinformation durch die Lichtenergie der LEDs eines benachbarten beleuchteten Bereich unerwünscht mit beleuchtet werden.

Die Reflektorbox kann aus einer Vielzahl von Trennwänden bestehen, welche sich zwischen Anzeige-LEDs und Anzeigefenster erstrecken und eine Lichtstrahlung aus einem benachbarten Bereich abschirmen. Mehrere lichtundurchlässige Trennwände der Reflektorbox können einen Lichtschacht bilden, wobei die Trennwände die Seitenwände des Lichtschachts darstellen. Die Trennwände können außerdem einen Rahmen ausbilden, welcher auf der einen Seite am Anzeigefenster und auf der anderen Seite an der die Anzeige-LEDs tragenden Platine anliegt. Der Rahmen der Reflektorbox kann somit den Abstand zwischen Platine bzw. Anzeige-LEDs und Anzeigefenster bestimmen sowie die Lage der Platine bzw. Anzeige-LEDs gegenüber dem Anzeigefenster fixieren.

Um die Reflektorbox zwischen der die Anzeige-LEDs tragenden Platine und dem Anzeigefenster lagegenau positionieren zu können, kann die Reflektorbox Positionierungselemente aufweisen. Diese Elemente können die Beibehaltung einer vordefinierten Lage der Reflektorbox relativ zum Anzeigefenster und/oder der Platine sicherstellen. Bei federnder Ausführung der Elemente können sich diese zum Beispiel auf der Platine federnd abstützen, so dass sich die Reflektorbox bei der Montage des Anzeigefensters gegenüber diesem in einer vorbestimmten Lage selbst fixiert. Außerdem können durch die federnden Elemente Abstandstoleranzen zwischen Anzeigefenster und Platine ausgeglichen werden.

Zahlreiche Varianten des Anzeigefensters können außer durch Variation der Folie und/oder Bedruckung auch durch geometrisch unterschiedliche Sichtbereiche der Vordergrundbeleuchtung erreicht werden. Dazu kann die Mikrostruktur das Anzeigefenster nur bereichsweise bedecken. Die Reflektorbox kann mehrere Lichtschächte aufweisen, die Bereiche unterschiedlicher Anzeigeinformation oder auch solche mit von anderen ohne Anzeigeinformation trennen. Die Seitenwände der Lichtschächte können auch lichtleitend sein. Sind sie außerdem farbig, können die mittels der Lichtschächte abgegrenzten Bereiche mit Anzeigeinformation mit ggf farbig beleuchteten Rahmen dargestellt werden.

Vorteilhaft kann das erfindungsgemäße Anzeigefenster auch mit LC-Anzeigen kombiniert werden. Das Anzeigefenster schafft für die LC-Zellen der LC-Anzeige eine Vordergrundbeleuchtung. Somit kann selbst die geringe Transmission von etwa 15 bis 25% von transflektiven und transmissiven LC-Zellen ohne Bedeutung bleiben, da die Vorderseite der LC-Zellen beleuchtet wird. Gegenüber einer Hinterleuchtung benötigt eine Vordergrundbeleuchtung außerdem weniger Lichtenergie. Ferner können die LC-Zellen reflektiv ausgeführt werden, um verbesserte Kontrasteigenschaften besonders bei mittlerem bis hellem Umgebungslicht zu ermöglichen.

Das erfindungsgemäße Anzeigefenster kann beispielsweise bei Hausgeräten zur Anwendung kommen. Solche Hausgeräte sind zum Beispiel: Waschgeräte, Trockner, Herde, Backöfen, Mikrowellengeräte, Geschirrspüler, Kühlgeräte und Dampfgarer. Der Anwendungsbereich der vorliegenden Erfindung ist jedoch nicht auf die genannten Beispiele beschränkt.

Das Prinzip der Erfindung wird im Folgenden anhand von Figuren beispielhaft näher erläutert. Es zeigen:

Figur 1 eine schematische Darstellung einer LED (Light Emitting Diode)-Anzeige mit Anzeigefenster aus der Sicht eines Betrachters;

Figur 2 eine Schnittdarstellung entsprechend der in Figur 1 dargestellten Schnittlinie A-A;

Figur 3 eine schematische Darstellung des Details Z aus Figur 2;

Figur 4 eine schematische Darstellung einer Anzeigenplatine mit SMD (Surface Mounted Device)-LEDs;

Figur 5 eine schematische Darstellung einer Anzeigenplatine mit SMD-LEDs mit einer aufgesetzten Reflektorbox;

Figur 6 eine schematische Darstellung einer Anzeigenplatine mit SMD-LEDs, aufgesetzter Reflektorbox und einer Folie; und

Figur 7 eine schematische Darstellung einer Anzeigenplatine mit SMD-LEDs, aufgesetzter Reflektorbox, Folie und Anzeigefenster.

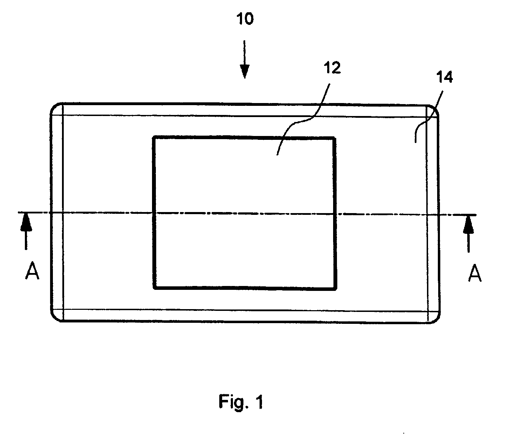

Figur 1 zeigt eine LED-Anzeigeeinheit 10 mit einem Anzeigefenster 12 und einem Gehäuse 14, wie sie für einen Betrachter sichtbar ist. Dabei ist eine Vorderseite des Anzeigefensters 12 zu sehen.

Dargestellt ist das Anzeigefenster 12 mit rechteckiger ebener Vorderseite. Das Gehäuse 14 umschließt das Anzeigefenster 12 in der Ansichtsebene vollständig. Die Vorderseite des Anzeigefensters 12 bildet mit dem Gehäuse 14 eine ebene Oberfläche. Das Gehäuse 14 weist eine Aussparung auf, deren Form der vom Betrachter aus sichtbaren Fläche des Anzeigefensters 12 entspricht.

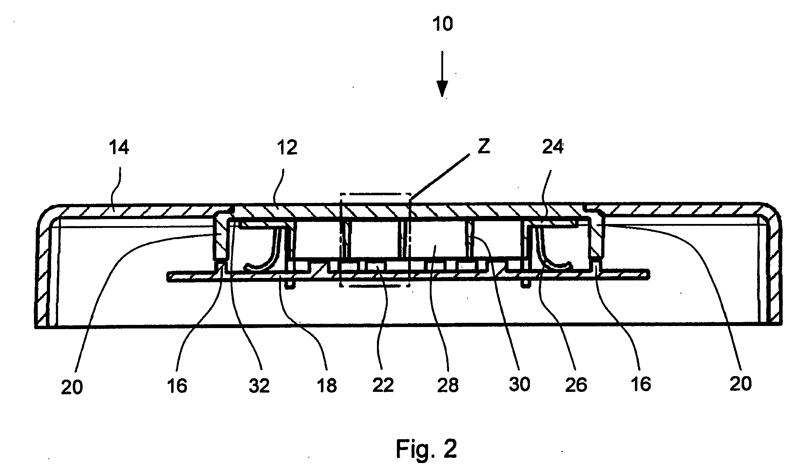

Figur 2 zeigt die in Figur 1 dargestellte Anzeigeeinheit 10 im Schnitt entlang der Schnittlinie A-A.

Das Gehäuse 14 und das Anzeigefenster 12 bilden eine horizontale Ebene. Parallel zu dieser Ebene und mit Abstand zum Anzeigefenster 12 ist eine Platine 18 angeordnet. In einem Randbereich der Platine 18 sind SMD-LEDs 16 aufgebracht. An diese SMD-LEDs angrenzend verlaufen in deren Abstrahlrichtung Lichtleitstrecken 20. Die Lichtleitstecken 20 sind als Bestandteil des Anzeigefensters 12 ausgeführt und stehen rechtwinklig von dessen Rand ab. Im zentralen Bereich der Platine 18 unterhalb des Anzeigefensters 12 sind mehrere Anzeige-LEDs 22 angeordnet.

Zwischen dem Anzeigefenster 12 und der Platine 18 befindet sich außerdem eine Reflektorbox 24. Sie weist mehrere Lichtschächte 28 auf, die sich von oberhalb der Anzeige-LEDs 22 in Richtung des Anzeigefensters 12 erstrecken. Sie werden von Seitenwänden 30 begrenzt, die zwischen Anzeigefenster 12 und Platine 18 senkrecht zur Vorderseite des Anzeigefensters 12 verlaufen.

Das Anzeigefenster 12 wird von den SMD-LEDs 16 beleuchtet. Diese SMD-LEDs 16 sind auf der Platine 18 seitlich der Anzeige-LEDs 22 platziert. Die Weiterleitung der Lichtenergie von den SMD-LEDs 16 zum Anzeigefenster 12 übernehmen die Lichtleitstrecken 20. Sie grenzen direkt an die SMD-LEDs 16 an bzw. sind benachbart und/oder beabstandet zu den SMD-LEDs 16 angeordnet.

Ebenfalls auf der Platine 18 sind die Anzeige-LEDs 22 angeordnet, welche auch LEDs in SMD-Bauweise sind. Die Anzeige-LEDs 22 geben die Anzeigeinformation wieder. Ihre Lichtenergie strahlen sie in Richtung des Anzeigefensters 12 ab. Dabei grenzen die Lichtschächte 28 mit ihren Seitenwänden 30 Bereiche unterschiedlicher Anzeigeinformation oder solche mit und ohne Anzeigeinformation voneinander ab.

Die Reflektorbox weist in einem Randbereich mehrere Positionierungselemente 26 auf. Sie sind federnd ausgeführt, so dass eventuell auftretende Lagetoleranzen, beispielsweise bezüglich des Abstandes zwischen Platine 18 und Anzeigefenster 12, ausgeglichen werden können. Die federnden Positionierungselemente 26 stellen die sichere Lage der Reflektorbox 24 relativ zur Platine 18 und zum Anzeigefenster 12 während der Montage der Anzeigeeinheit 10 selbsttätig sicher.

Zwischen der Rückseite des Anzeigefensters 12 und der Reflektorbox 24 ist eine Folie 32 aufgebracht. Sie ist transparent und diffus. Aufgrund dessen erscheint die Anzeigeinformation für den Betrachter homogen, selbst wenn sie von mehreren einzelnen Anzeige-LEDs 22 erzeugt wird.

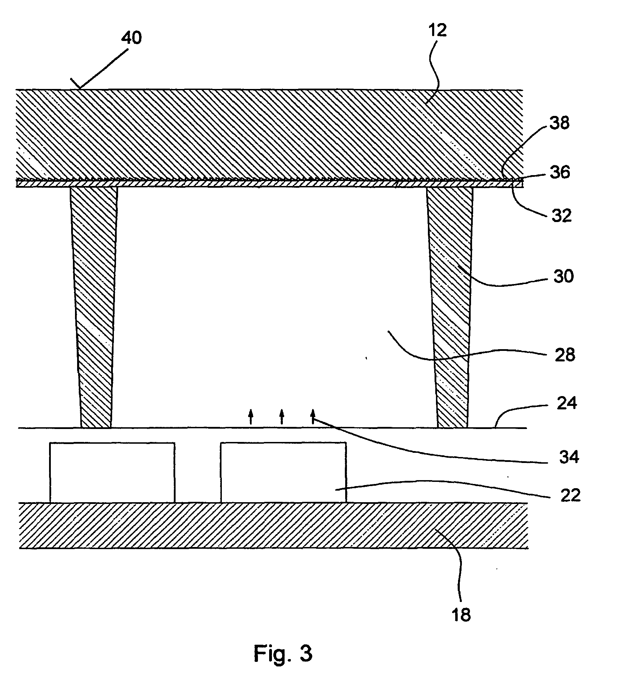

Figur 3 zeigt eine Vergrößerung des in Figur 2 mit Z gekennzeichneten Details.

In dieser vergrößerten Darstellung ist eine auf der Rückseite des Anzeigefensters 12 angeordnete Mikrostruktur 36 zu erkennen, die sich aus einer Vielzahl von Flächen 38 zusammensetzt. Die Flächen 38 weisen eine vordefinierte Neigung gegenüber der Vorderseite des Anzeigefensters 12 auf.

Die auf der Platine 18 angeordneten Anzeige-LEDs 22 eines Anzeigeinformationsbereichs strahlen ihre Lichtenergie 34 durch den Lichtschacht 28 in Richtung des Anzeigefensters 12 ab. Die Anzeige-LEDs 22 sind ebenfalls in SMD-Bauweise ausgeführt. Durch die diffuse Folie 32 hindurch erscheinen die mittels der Anzeige-LEDs 22 dargestellten Anzeigeinformationen, wie zum Beispiel Texte oder Symbole, für den Betrachter des Anzeigefensters 12 als homogene Linienzüge und nicht in Form einer Vielzahl einzelner, beispielsweise punktförmiger Lichtquellen.

Die Flächen 38 der Mikrostruktur 36 sind so ausgerichtet, dass die von den SMD-LEDs 16 in das Anzeigefenster 12 eingekoppelte Lichtenergie senkrecht nach oben zur Oberfläche 40 des Anzeigefensters 12 reflektiert wird.

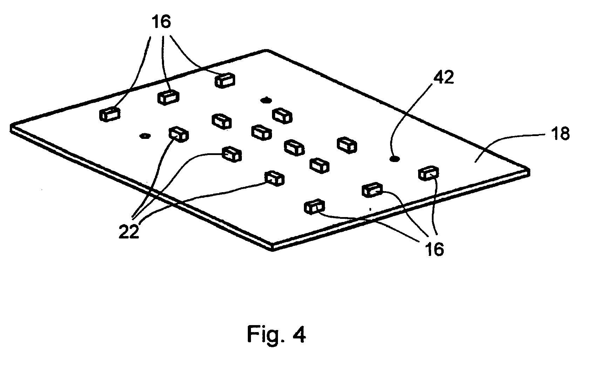

Zur besseren Verdeutlichung des Aufbaus der Anzeigeeinheit 10 zeigen die Figuren 4 bis 7 Einzelteile der Anzeigeeinheit 10 in Perspektivdarstellung. Die Reihenfolge der Figuren 4 bis 7 kann zudem als Montagereihenfolge für die Anzeigeeinheit 10 gesehen werden.

Figur 4 zeigt die Platine 18 mit neun in einem zentralen Bereich der Platine 18 aufgebrachten Anzeige-LEDs 22. Sie dienen zur Darstellung einer Anzeigeinformation. In einem Randbereich der Platine 18 sind rechts und links neben den Anzeige-LEDs 22 jeweils drei SMD-LEDs 16 angeordnet. Sie bilden die Basis für die Beleuchtung des Anzeigefensters 12 (in Figur 4 nicht dargestellt). Außerdem sind Positionierungshilfen 42 in Form von Ausnehmungen in die Platine 18 eingebracht, um die Reflektorbox 24 auf der Platine 18 lagesicher positionieren zu können.

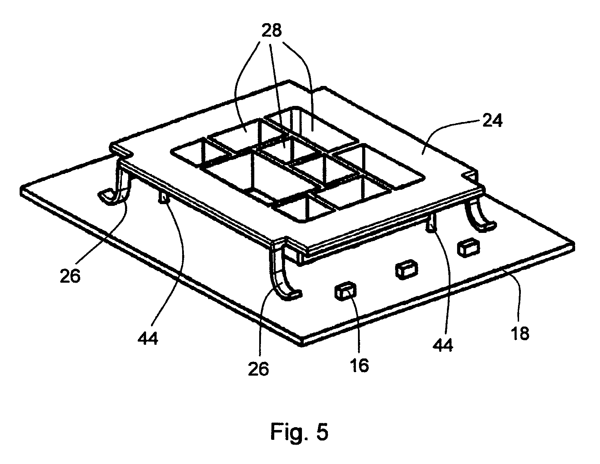

Figur 5 zeigt die in Figur 4 dargestellte Platine 18 mit aufgesetzter Reflektorbox 24. Die Reflektorbox 24 weist Vorsprünge 44 auf, welche in Form und Lage mit den Positionierungshilfen 42 der Platine 18 korrespondieren. Beim Aufsetzen der Reflektorbox 24 auf die Platine 18 greifen diese Vorsprünge 44 in die Positionierungshilfen 42 der Platine 18 ein und sichern so die Lage der Reflektorbox 24 relativ zur Platine 18. Den notwendigen Abstand der Unterkante der Reflektorbox 24 zu den Anzeige-LEDs 22 bzw. zur Platine 18 stellen die Positionierungselemente 26 sicher. Sie sind federnd ausgeführt, wodurch eine selbsttätige Ausrichtung und Fixierung der Reflektorbox 24 gegenüber dem Anzeigefenster 12 und der Platine 18 erfolgt.

Die Reflektorbox 24 umfasst mehrere Lichtschächte 28, deren Anordnung, Anzahl, Form und Größe derjenigen der Anzeigeinformationsbereiche entspricht. Um die Lichtschächte 28 herum ist ein Rahmen angeordnet, welcher ein sicheres Anliegen der Reflektorbox 24 am Anzeigefenster 12 gewährleistet.

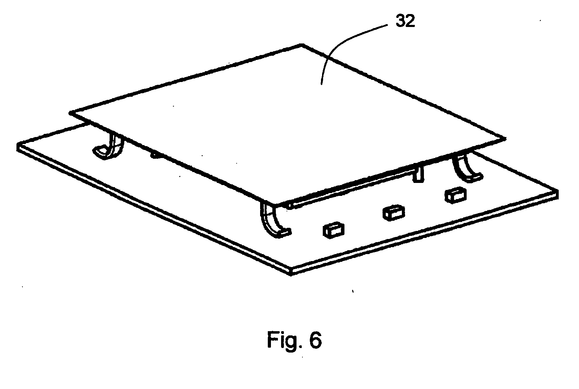

Figur 6 unterscheidet sich von Figur 5 dadurch, dass auf die Reflektorbox 24 die Folie 32 aufgebracht ist. Zur sicheren Lagefixierung der Folie 32 auf der Reflektorbox 24 weist die Folie 32 eine Haftschicht, beispielsweise eine Klebeschicht, auf.

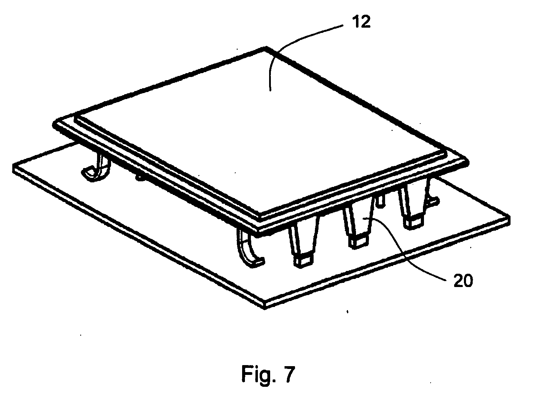

Figur 7 zeigt einen Montagezustand der Anzeigeeinheit 10, bei welchem zusätzlich zu dem in Figur 6 dargestellten Montagezustand das Anzeigefenster 12 mit den Lichtleitstrecken 20 auf die Folie 32 aufgesetzt ist.

Es wird abschließend noch einmal darauf hingewiesen, dass es sich bei der vorhergehenden, detailliert beschriebenen Anzeigeeinheit 10 um ein Ausführungsbeispiel handelt, welches vom Fachmann in verschiedenster Weise modifiziert werden kann, ohne den Bereich der Erfindung zu verlassen. Insbesondere können auch die konkreten Ausgestaltungen des Gehäuses 14 und des Anzeigefensters 12 in anderer als der hier beschriebenen Form erfolgen. Ebenso kann die Reflektorbox 24 in einer anderen Form ausgestaltet werden, wenn dies aus Platz- bzw. designerischen Gründen notwendig ist.

Es wird der Vollständigkeit halber außerdem darauf hingewiesen, dass die Verwendung der unbestimmten Artikel "ein" bzw. "eine" nicht ausschließt, dass die betreffenden Merkmale auch mehrfach vorhanden sein können.

**BEZUGSZEICHENLISTE**

10 - Anzeigeeinheit

12 - Anzeigefenster

14 - Gehäuse

16 - SMD-LED

18 - Platine

20 - Lichtleitstrecke

22 - Anzeige-LED

24 - Reflektorbox

26 - Positionierungselement

28 - Lichtschacht

30 - Seitenwand

32 - Folie

34 - Lichtenergie

36 - Mikrostruktur

38 - Fläche der Mikrostruktur 36

40 - Oberfläche des Anzeigefensters 12

42 - Positionierungshilfe

44 - Vorsprung

## Patentansprüche

1. Anzeigefenster (12), insbesondere für LED- und LC-Anzeigen, mit einem Leuchtmittel (16) und einer Mikrostruktur (36) zur Beleuchtung des Anzeigefensters (12), wobei Licht des Leuchtmittels (16) zur Beleuchtung des Anzeigefensters (12) seitlich in das Anzeigefenster (12) einstrahlbar ist, **dadurch gekennzeichnet, dass** die Mikrostruktur (36) an dem Anzeigefenster (12) auf dessen der Anzeige (22) zugewandten Seite angeordnet ist, und dass die Mikrostruktur (36) das Anzeigefenster (12) nur bereichsweise bedeckt.

2. Anzeigefenster (12) nach Anspruch 1, **dadurch gekennzeichnet, dass** die Mikrostruktur (36) Flächen (38) aufweist, welche das vom Leuchtmittel (16) in das Anzeigefenster (12) eingekoppelte Licht senkrecht zur Oberfläche (40) des Anzeigefensters (12) reflektieren.

3. Anzeigefenster (12) nach Anspruch 2, **dadurch gekennzeichnet, dass** die Flächen (38) das Licht des Leuchtmittels (16) vollständig reflektierend ausgebildet sind, und dass diejenigen Bereiche des Anzeigefensters (12) ohne Flächen (38) ausgebildet sind, durch die hindurch eine Anzeigeinformation der Anzeige (22) erkennbar ist.

4. Anzeigefenster (12) nach einem der Ansprüche 1 bis 3, **dadurch gekennzeichnet, dass** zwischen Anzeigefenster (12) und Leuchtmittel (16) wenigstens eine Lichtleitstrecke (20) angeordnet ist.

5. Anzeigefenster (12) nach einem der vorhergehenden Ansprüche, **dadurch gekennzeichnet, dass** das Anzeigefenster (12) eine Folie (32) oder Bedruckung aufweist.

6. Anzeigefenster (12) nach einem der vorhergehenden Ansprüche, **dadurch gekennzeichnet, dass** die Folie (32) diffus ist.

7. Anzeigefenster (12) nach einem der vorhergehenden Ansprüche, **dadurch gekennzeichnet, dass** das Anzeigefenster (12) eingefärbt ist.

8. Anzeigefenster (12) nach einem der vorhergehenden Ansprüche, **dadurch gekennzeichnet, dass** das Anzeigefenster (12) eine Reflektorbox (24) mit wenigstens einem Lichtschacht (28) mit Seitenwänden (30) aufweist.

9. Anzeigefenster (12) nach einem der Ansprüche 8, **dadurch gekennzeichnet, dass** die Reflektorbox (24) federnd ausgebildete Positionierungselemente (26, 44) aufweist.

10. Hausgerät mit LED- oder LC-Anzeigeeinheit, umfassend wenigstens ein Anzeigefenster (12) nach einem der Ansprüche 1 bis 9.

## Claims

1. Display window (12), particularly for LED and LC displays, with a lighting means (16) and a microstructure (36) for lighting up the display window (12), wherein light of the lighting means (16) for lighting up the display window (12) can be radiated into the display window (12) laterally, **characterised in that** the microstructure (36) is arranged at the display window (12) on the side thereof facing the display (22) and that the microstructure (36) covers the display window (12) only in regions.

2. Display window (12) according to claim 1, **characterised in that** the microstructure (36) has surfaces (38) which reflect the light, which is coupled from the lighting means (16) into the display window (12), perpendicularly to the surface (40) of the display window (12).

3. Display window (12) according to claim 2, **characterised in that** the surfaces (38) are constructed to completely reflect the light of the lighting means (16) and that those regions of the display window (12) through which display information of the display (22) is recognisable are constructed without surfaces (38).

4. Display window (12) according to any one of claims 1 to 3, **characterised in that** at least one optical conducting path is arranged between display window (12) and display means (16).

5. Display window (12) according to any one of the preceding claims, **characterised in that** the display window (12) has a film (32) or printing.

6. Display window (12) according to any one of the preceding claims, **characterised in that** the film (32) is diffuse.

7. Display window (12) according to any one of the preceding claims, **characterised in that** the display window (12) is coloured.

8. Display window (12) according to any one of the preceding claims, **characterised in that** the display window (12) comprises a reflector box (24) with at least one light shaft (28) with side walls (30).

9. Display window (12) according to claim 8, **characterised in that** the reflector box (24) comprises resiliently constructed positioning elements (26, 44).

10. Domestic appliance with LED or LC display unit, comprising at least one display window (12) according to any one of claims 1 to 9.

## Revendications

1. Fenêtre d'affichage (12), notamment pour affichages à diodes luminescentes et à cristaux liquides, comprenant un moyen lumineux (16) et une microstructure (36) pour l'éclairage de la fenêtre d'affichage (12), de la lumière du moyen lumineux (16) pouvant être rayonnée latéralement dans la fenêtre d'affichage (12) pour l'éclairage de la fenêtre d'affichage (12), **caractérisée en ce que** la microstructure (36) est disposée sur la fenêtre d'affichage (12) sur le côté de celle-ci tourné vers l'affichage (22), et **en ce que** la microstructure (36) ne recouvre la fenêtre d'affichage (12) que dans certaines parties.

2. Fenêtre d'affichage (12) selon la revendication 1, **caractérisée en ce que** la microstructure (36) présente des surfaces (38) lesquelles réfléchissent la lumière, couplée dans la fenêtre d'affichage (12) par le moyen lumineux (16), perpendiculairement à la surface (40) de la fenêtre d'affichage (12).

3. Fenêtre d'affichage (12) selon la revendication 2, **caractérisée en ce que** les surfaces (38) sont réalisées de manière à réfléchir complètement la lumière du moyen lumineux (16), et **en ce que** les zones de la fenêtre d'affichage (12), à travers lesquelles une information affichée de l'affichage (22) est identifiable, sont réalisées sans surfaces (38).

4. Fenêtre d'affichage (12) selon l'une quelconque des revendications 1 à 3, **caractérisée en ce qu'**au moins une trajectoire de guidage de lumière (20) est disposée entre la fenêtre d'affichage (12) et le moyen lumineux (16).

5. Fenêtre d'affichage (12) selon l'une quelconque des revendications précédentes, **caractérisée en ce que** la fenêtre d'affichage (12) présente une feuille (32) ou une impression.

6. Fenêtre d'affichage (12) selon l'une quelconque des revendications précédentes, **caractérisée en ce que** la feuille (32) est diffuse.

7. Fenêtre d'affichage (12) selon l'une quelconque des revendications précédentes, **caractérisée en ce que** la fenêtre d'affichage (12) est colorée.

8. Fenêtre d'affichage (12) selon l'une quelconque des revendications précédentes, **caractérisée en ce que** la fenêtre d'affichage (12) présente une boîte à réflecteur (24) comprenant au moins une prise de lumière (28) munie de parois latérales (30).

9. Fenêtre d'affichage (12) selon la revendication 8, **caractérisée en ce que** la boîte à réflecteur (24) présente des éléments de positionnement (26, 44) réalisés de manière à faire ressort.

10. Appareil domestique avec unité d'affichage à diodes luminescentes ou à cristaux liquides, comprenant au moins une fenêtre d'affichage (12) selon l'une quelconque des revendications 1 à 8.
